Europäisches Patentamt

European Patent Office

Office européen des brevets

(19)

(11) EP 0 605 282 B1

(12) **FASCICULE DE BREVET EUROPEEN**

(45) Date de publication et mention
de la délivrance du brevet:
**26.02.1997 Bulletin 1997/09**

(51) Int Cl.⁶: **H04N 5/33**, H04N 3/15

(21) Numéro de dépôt: **93403077.6**

(22) Date de dépôt: **17.12.1993**

(54) **Détecteur d'image thermique avec obturateur rotatif à fréquence de rotation élevée et procédé de fonctionnement**

Wärmebilddetektor mit Umlaufblende die mit erhöhter Frequenz rotiert und Verfahren zum Betrieben

Thermal image detector with totating shutter having an increased rotation frequency and method of operation

(84) Etats contractants désignés:
**DE FR GB IT NL**

(30) Priorité: **30.12.1992 FR 9215907**

(43) Date de publication de la demande:
**06.07.1994 Bulletin 1994/27**

(73) Titulaire: **THOMSON-CSF SEMICONDUCTEURS SPECIFIQUES**
**75008 Paris (FR)**

(72) Inventeur: **Dautriche, Pierre**
**F-92402 Courbevoie Cedex (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
**EP-A- 0 435 773          US-A- 4 072 863**

• **RADIO FERNSEHEN ELEKTRONIK vol. 39, no. 4 , BERLIN , ALLEMAGNE pages 218 - 221 XP000108547 M. BLASCHKE, B. GUTSCHWAGER, U. KIENITZ 'INFRAROT - ZEILENKAMERA MIT PYROELEKTRISCHEM ZEILENSENSOR MODUL'**
• **PATENT ABSTRACTS OF JAPAN vol. 14, no. 461 (E-987)5 Octobre 1990 & JP-A-21 085 174 (SONY CORP) 19 Juillet 1990**

## Description

L'invention concerne les détecteurs d'images thermiques, notamment les détecteurs pyroélectriques, destinés à produire une image d'une scène en lumière infra-rouge, et tout particulièrement ceux qui fonctionnent à température ambiante.

Les détecteurs pyroélectriques fonctionnent de la manière suivante : ils absorbent le rayonnement infrarouge pour échauffer une couche pyroélectrique, c'est-à-dire une couche ayant la propriété d'engendrer des charges de surface en fonction de la température. Les charges engendrées, converties en tension électrique sont traitées pour fournir une mesure de l'intensité de rayonnement infrarouge reçue par le détecteur. D'autres types de détecteurs d'image en infrarouge peuvent exister, reposant sur d'autres effets que l'effet pyroélectrique mais reposant aussi sur l'échauffement d'une couche. Ils sont concernés par l'invention, mais celle-ci sera décrite en détail uniquement à propos d'un détecteur pyroélectrique.

Le détecteur peut être ponctuel, ou peut comporter une colonne de points pyrosensibles pour faire une image infrarouge linéaire, ou encore un réseau matriciel de points pour faire une image bidimensionnelle; cette image peut être en particulier une image des répartitions de températures d'une scène observée.

Il existe des détecteurs hybrides utilisant deux substrats : un substrat qui assure la fonction pyroélectrique et un substrat qui assure les fonctions de traitement de signal. Les deux substrats sont collés face à face pour relier chaque point pyrosensible du premier substrat à un point du deuxième substrat.

Plus récemment, on a proposé aussi des détecteurs monolithiques qui sont constitués par un substrat de circuit intégré recouvert de matériau pyroélectrique déposable en couche mince (matériau polymère pyroélectrique). Le substrat porte les éléments de circuit nécessaires au traitement du signal pyroélectrique engendré.

Du fait que le matériau pyroélectrique produit des charges proportionnellement à son échauffement, et du fait que cet échauffement est une intégrale de l'intensité de rayonnement reçue, le détecteur pyroélectrique doit fonctionner de manière différentielle et non de manière absolue, surtout si on veut observer des scènes fixes. En effet, une intensité de rayonnement constante, représentant la luminance d'un point émettant un rayonnement infrarouge, va provoquer un échauffement progressif du matériau jusqu'à une valeur de saturation qui ne permettra pas de déduire l'intensité de rayonnement reçue. D'autre part, une mesure absolue de température dépendrait trop des variations de température ambiante du détecteur et ne serait pas suffisamment représentative des répartitions de températures de la scène observée.

C'est pourquoi on prévoit que le détecteur est alternativement éclairé, c'est-à-dire soumis au rayonnement infrarouge, puis masqué. La période de l'alternance éclairement - masquage doit être suffisante pour que le matériau pyroélectrique ait le temps de s'échauffer pendant l'éclairement et le temps de se refroidir pendant le masquage. La période est par exemple de 50 Hertz (10 millisecondes d'éclairement pour 10 millisecondes de masquage). Ce qu'on mesure alors n'est pas l'échauffement moyen mais l'amplitude de variation de l'échauffement au cours de l'alternance. Cette amplitude est en effet représentative de l'intensité reçue, beaucoup mieux que l'échauffement moyen qui dépend de trop d'autres paramètres.

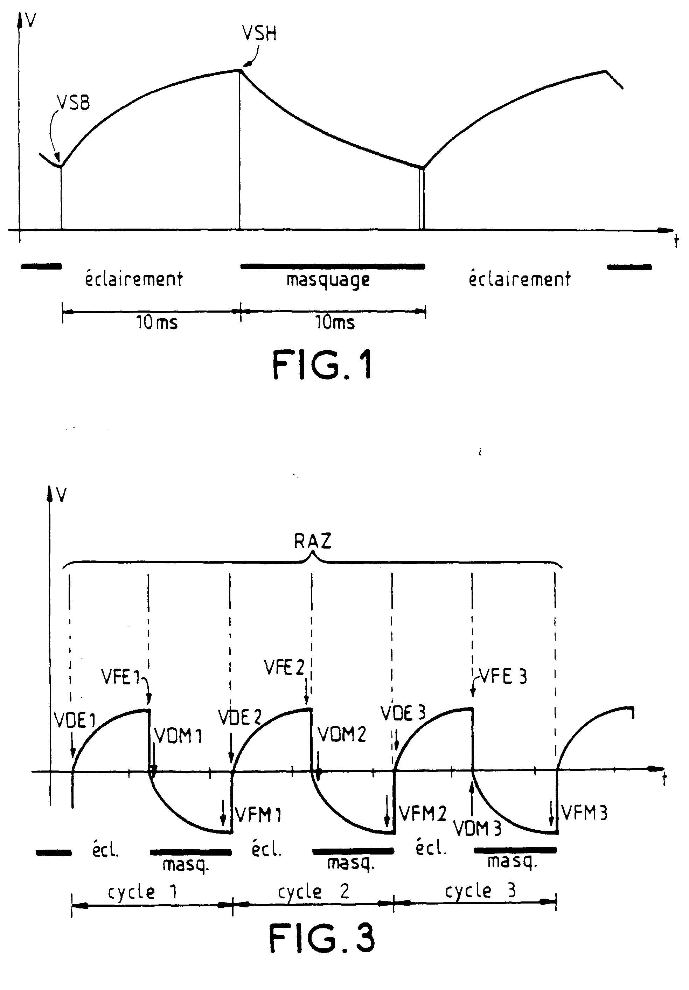

La courbe de la figure 1 représente l'évolution de la température de la couche pyroélectrique dans le cas où l'éclairement est ainsi alterné. La courbe est exprimée directement en tension en fonction du temps, la tension indiquée étant une tension fictive représentant un signal de sortie du détecteur, ce signal étant supposé proportionnel à l'échauffement du matériau pyroélectrique.

La température monte au début d'une phase d'éclairement et tend vers une valeur de saturation haute qui dépend non seulement de l'intensité infrarouge reçue mais aussi des pertes thermiques de la couche pyroélectrique. Puis elle redescend dès le début de la phase de masquage, et tend également vers une valeur de saturation basse, avec une vitesse qui dépend également des pertes thermiques. La différence entre la tension à la fin de la phase d'éclairement et la tension à la fin de la phase de masquage est une bonne mesure de l'intensité de rayonnement infrarouge reçue.

La détection consiste alors en gros à mesurer un échantillon de signal VSH à la fin d'une phase d'éclairement et un échantillon de signal VSB à la fin d'une phase de masquage, et à faire la différence VSH-VSB pour en déduire une valeur d'intensité infrarouge reçue.

On comprend que la période de l'alternance éclairement/masquage doit être telle que la couche pyroélectrique ait le temps de s'échauffer et de se refroidir à chaque phase, pour que les variations de charges générées soient d'amplitude suffisante. Si la durée de chaque phase est trop courte le rapport signal/bruit est trop faible, le bruit considéré ici étant un bruit indépendant de la durée de la phase. Si elle est trop longue, le gain en niveau de signal n'est plus amélioré du fait de la saturation de la courbe de signal (voir figure 1). De plus, pour des raisons de compatibilité avec des systèmes d'imagerie classiques on souhaite sortir une image à une fréquence comprise entre 25 et 60 Hz.

Ces raisons font que le plus souvent on est amené à faire fonctionner l'obturateur à une fréquence qui correspond justement à la fréquence de sortie des images (25, 30, 50 ou 60 Hertz), pour laquelle le niveau de signal obtenu est suffisant sans être trop près de la saturation.

Cependant, on s'est aperçu que certaines structures de détecteurs pyroélectriques sont sensibles à un bruit dont l'amplitude est proportionnelle à la durée de l'intégration. Sans entrer dans tous les cas où cela est possible, on peut signaler à titre d'exemple que c'est le cas dans une structure de détecteur monolithique dans laquelle chaque point d'image est défini par une capacité pyroélectrique et dans laquelle la capacité est reliée à un substrat semiconducteur par l'intermédiaire d'une diode polarisée en inverse. La génération thermique naturelle de porteurs de charge dans cette diode perturbe la charge pyroélectrique engendrée par l'image observée. Et cette perturbation est proportionnelle à la durée de chaque phase, une remise à niveau du potentiel de la capacité étant faite à la fin de chaque phase pour éviter une dérive permanente.

Ce bruit peut n'être pas négligeable pour les durées de phases considérées ci-dessus.

L'invention propose un moyen pour améliorer le rapport signal/bruit des détecteurs thermiques.

On notera que l'art antérieur divulgue à titre d'exemple :

- RADIO FERNSEHEN ELKTRONIK vol. 39, N°4, BERLIN, Allemagne, pages 128-221, Blaschke, Gutschwager, Kienitz "Infrarot ZeilenKamera mit pyroelektrischem Zeilensensor" : un détecteur d'image pyroélectrique qui comporte au moins une colonne de points pyrosensibles, chaque point étant relié à un étage respectif d'un registre à décalage pour y déverser des charges en quantité de l'amplitude de variation d'échauffement, un obturateur, un moyen pour fournir cycliquement un signal de mesure de point éclairé au cours d'une phase d'éclairement, un signal de mesure de point masqué au cours d'une phase de masquage et des moyens pour établir, par différence entre les signaux de mesure, un signal de l'amplitude de variation d'échauffement.

- EP-A- 0 435 773 : divulgue un détecteur d'image thermique avec une couche photosensible et des circuits de balayage intégrés, qui comporte entre autres un registre à déclage pour additionner et retarder les signaux de lecture (TDI). Entre les différentes étapes de ce procédé, les signaux de lecture sont aussi avancés et reculés dans ledit registre.

On propose selon l'invention un détecteur d'image thermique qui comporte au moins une colonne de points pyrosensibles, chaque point relié à un étage respectif d'un registre à décalage (RD) pour y déverser des charges en quantité dépendant de la température de chaque point, le nombre d'étages du registre étant supérieur au nombre de points pyrosensibles de la colonne, un obturateur pour alternativement éclairer et masquer le détecteur, un moyen pour fournir cycliquement au registre au moins un signal de mesure de point éclairé au cours d'une phase d'éclairement et au moins un signal de mesure de point masqué au cours d'une phase de masquage, caractérisé en ce que des étages de registre non connectés aux points pyrosensibles sont intercalés entre les étages connectés aux points pyrosensibles, et en ce qu'il est prévu un moyen pour faire avancer d'un pas le contenu du registre entre les déversements de mesures d'un cycle comportant au moins une phase d'éclairement et une phase de masquage, un moyen pour faire reculer, d'un nombre de pas en arrière lié au nombre de pas en avant dans le cycle précédent, le contenu du registre avant le déversement des mesures du cycle suivant et pour le faire avancer à nouveau d'un pas entre les déversements de ce cycle suivant, et des moyens pour vider le registre après l'exécution d'un groupe d'au moins deux cycles successifs pour fournir un signal d'image.

L'invention propose également un procédé de fonctionnement d'un détecteur d'image thermique selon le revendication 2.

Le procédé consiste donc à

a.) faire des mesures au cours d'un premier cycle comprenant une alternance de phases d'éclairement et de masquage, et déverser les résultats des mesures dans des étages successifs d'un registre à décalage, en faisant avancer le registre d'un pas après un déversement et avant le déversement d'une mesure suivante de ce cycle,

b.) faire reculer le contenu du registre d'un nombre de pas en arrière lié au nombre de pas en avant dans le cycle, (en général le nombre de pas en arrière sera le même que le nombre de pas en avant),

c.) faire des mesures au cours d'un deuxième cycle comprenant une alternance de phases d'éclairement et de masquage, déverser les résultats des mesures dans les étages du registre à décalage en faisant à nouveau avancer le registre d'un pas après un déversement et avant le déversement suivant dans le même cycle,

d.) et enfin vider la totalité du contenu du registre pour fournir un signal d'image après l'exécution d'au moins deux cycles successifs.

Le groupe d'étapes b.) c.) peut être répété plusieurs fois, ce qui veut dire qu'on ne vide le registre qu'après une série de trois, quatre ou plus de cycles.

Le niveau de signal est augmenté par l'addition successive de mesures dans les mêmes cases du registre à décalage. On peut multiplier la vitesse de fonctionnement de l'obturateur (et donc la périodicité des mesures effectuées). Cependant la fréquence de sortie du signal d'image final peut rester constante (50 Hz par exemple pour une périodicité de l'obturateur de 100 Hz, voire 150 ou 200 Hz). Le bruit proportionnel à la durée des phases d'éclairement et de masquage est très fortement diminué puisque ces durées sont divisées par 2, 3 ou 4.

En pratique, on ne se contente pas d'une mesure au cours d'une phase, mais on fait plutôt une mesure en début de phase, par exemple après une étape de remise à niveau, et une mesure en fin de phase. Dans ce cas, le registre avance de trois pas au cours d'un cycle et il devra reculer de trois pas avant le cycle suivant.

Le signal de sortie du détecteur sera établi à partir d'une double différence : un premier signal différentiel représente la différence entre les mesures faites en début et en fin de phase d'éclairement et cumulées par le registre sur au moins deux cycles successifs ; un deuxième signal différentiel représente la différence entre les mesures faites en début et en fin de phase de masquage et également cumulées sur deux cycles. Et un signal de résultat est établi à partir de la différence entre les deux signaux différentiels. C'est ce signal qui représente la température ou l'intensité d'émission infrarouge d'un point d'une scène projetée et focalisée sur le détecteur.

L'invention est applicable tout particulièrement aux détecteurs monolithiques dans lesquels les charges engendrées par effet pyroélectrique servent à contrôler le niveau d'une barrière de potentiel dans un dispositif à transfert de charges, mais dans lesquels on a prévu une diode entre le substrat de ce dispositif et la capacité.

D'autres caractéristiques et avantages de l'invention apparaîtront à la lecture de la description détaillée qui suit et qui est faite en référence aux dessins annexés dans lesquels :

- la figure 1 déjà décrite représente un diagramme temporel expliquant l'allure des variations de température engendrées dans la couche pyroélectrique d'un détecteur à obturateur;
- la figure 2 représente la structure générale d'un détecteur pyroélectrique monolithique comprenant des dispositifs de traitement à transfert de charges;
- la figure 3 représente l'allure des variations de tension aux bornes de la capacité pyroélectrique dans un détecteur, avec remise à niveau périodique;
- la figure 4 représente l'organisation du détecteur avec des capacités pyroélectriques et des moyens d'injection dans un registre à transfert de charge;
- les figures 5 à 8 représentent les étapes successives de fonctionnement du registre à décalage.

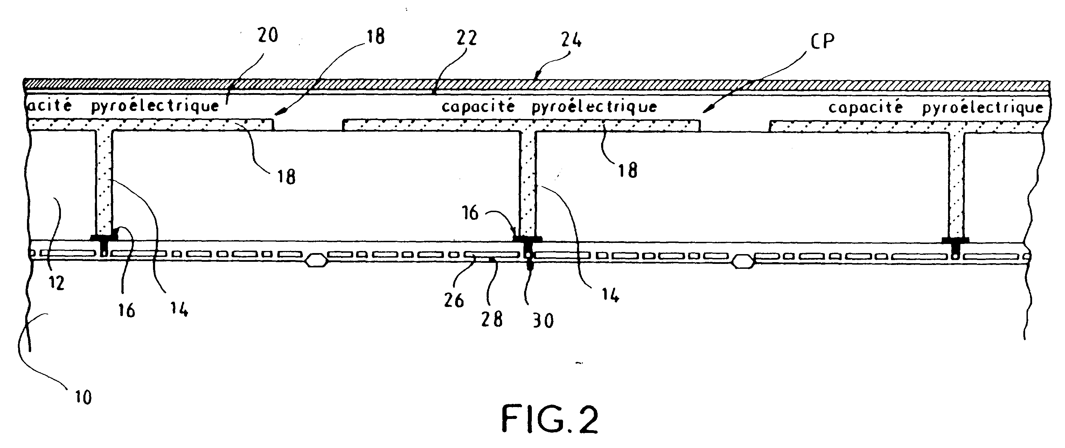

On se référera à la demande de brevet FR 90/15476 du Demandeur pour comprendre en détail la construction et le fonctionnement d'un détecteur matriciel pyroélectrique monolithique. De manière générale, comme représenté à la figure 2, le détecteur comporte un substrat monolithique de silicium 10 dans lequel est formé un circuit intégré comprenant essentiellement des dispositifs à transfert de charge et les circuits de commande associés; les dispositifs à transfert de charge sont essentiellement des registres à décalage à transfert de charges en colonnes parallèles, avec des moyens pour injecter dans les cases de ce registre des charges en quantité liées à l'éclairement infrarouge qu'on cherche à mesurer, c'est-à-dire en général liées à la température de chaque point de l'image infrarouge observée. Les circuits de commande sont les circuits qui permettent d'une part l'injection de charges dans les registres, d'autre part les décalages périodiques de paquets de charges le long des registres, et enfin la lecture de ces charges, c'est-à-dire la conversion des paquets de charges en tensions électriques. Le substrat semiconducteur est recouvert d'un isolant électrique et thermique 12, par exemple en polyimide. Cet isolant est percé localement d'ouvertures que l'on remplit de matériau conducteur pour constituer des vias conducteurs 14 entre le dessus et le dessous de la couche d'isolant thermique. Au dessous de cette couche, les vias sont en contact chacun avec un conducteur respectif 16 du circuit intégré sous-jacent. Au dessus de la couche thermiquement isolante 12 sont déposées des électrodes rectangulaires individuelles 18, en réseau matriciel occupant la majeure partie de la surface du détecteur; chaque électrode 18 définit un point d'image à observer et elle est reliée à un via conducteur respectif 14, donc à un conducteur respectif 16 du substrat semiconducteur. La couche d'isolant thermique, ainsi revêtue d'électrodes reliées au circuit intégré, est recouverte d'une couche pyroélectrique 20, de préférence une couche de matériau polymère pyroélectrique à faible conductivité thermique. Enfin, une couche conductrice 22 est déposée sur la surface de la couche pyroélectrique, et une couche 24 absorbant les infrarouges dans la gamme de longueurs d'onde désirée (en général 8 à 14 micromètres) est déposée sur la couche conductrice 22. Les couches 22 et 24 peuvent être confondues.

Chaque électrode définit, avec la portion de couche pyroélectrique qui la recouvre, une capacité pyroélectrique CP ayant une armature inférieure individuelle 18 et une armature supérieure collective 22; cette capacité se charge en fonction de sa température et elle est reliée au circuit intégré sous-jacent en vue de créer dans le circuit intégré un signal électrique résultant de cette charge.

Le circuit intégré sous-jacent est un circuit à transfert de charges et on a symbolisé ce circuit par des électrodes juxtaposées 26, en général en silicium polycristallin; ces électrodes sont isolées, par une couche isolante mince 28, du substrat semiconducteur 10 dans lequel circulent des charges électriques. Le conducteur 16, relié au via conducteur 14 d'une capacité respective, peut être relié électriquement à une de ces électrodes, désignée par 30 sur la figure 2; cette électrode agit comme barrière de potentiel de hauteur variable pour les charges qui circulent dans le substrat, de sorte qu'on peut moduler des paquets de charges en fonction de la charge de chaque capacité pyroélectrique. Les charges modulées sont transférées dans des registres à décalage qui décalent ensuite ces charges parallèlement aux colonnes de capacités du réseau, c'est-à-dire dans une direction perpendiculaire au plan de la figure 2.

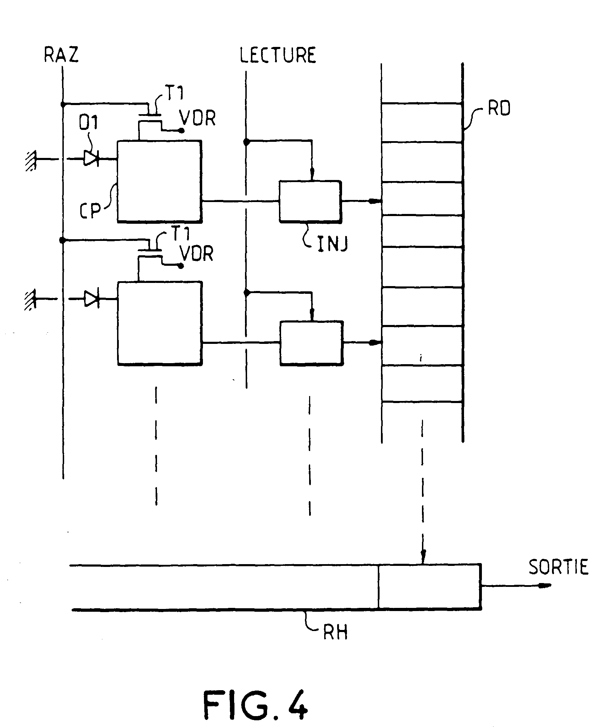

De préférence, bien que ce ne soit pas visible sur la figure 2, le conducteur 16 relié à l'armature inférieure 18 de la capacité est connecté à une zone diffusée de type N+ formant avec le substrat une jonction PN polarisée en inverse en fonctionnement normal (diode D1 sur la figure 4). De plus, comme cette diode engendre un bruit de charges par effet thermique, un transistor T1 (fig. 4) de remise à niveau périodique de la tension de l'armature 18 est prévu. La remise à niveau est effectuée en synchronisme avec le fonctionnement de l'obturateur. Des détails sur ce point sont donnés dans le brevet FR 90 15476 précité.

Dans d'autres réalisations à transfert de charges, les capacités pyroélectriques sont reliées directement au substrat pour une injection directe de charges pyroélectriques dans le semiconducteur. Dans d'autres réalisations n'utilisant pas de dispositifs à transfert de charges, les capacités pyroélectriques sont reliées à des circuits de mesure directe de la tension aux bornes de ces capacités.

Le détecteur ainsi réalisé sera en général placé derrière une optique qui forme à la surface du détecteur une image en infrarouge d'une scène observée. Une lentille au germanium convient pour les longueurs d'onde de l'ordre de 10 micromètres. Un obturateur actionné périodiquement est placé entre la scène à observer et le détecteur, en principe entre la lentille et le détecteur.

La couche absorbante reçoit le rayonnement infrarouge avec une intensité qui dépend localement de la scène observée. Elle s'échauffe donc localement selon un motif de températures qui correspond à l'image observée. Les capacités pyroélectriques s'échauffent en conséquence en fonction de cette image et définissent des points d'image reproduisant, avec une résolution définie par le nombre de capacités du réseau matriciel, le motif de température de la couche absorbante.

Chaque capacité engendre des charges de surface en fonction de sa température moyenne propre, de sorte qu'à un instant donné, une capacité donnée possède une charge propre, qui représente l'influence, en ce point et à cet instant, du rayonnement infrarouge reçu par le détecteur.

Comme on l'a expliqué précédemment, la détection d'image infrarouge nécessite qu'on effectue une mesure différentielle entre la charge résultant de l'éclairement et la charge dans l'obscurité. L'obturateur placé devant le détecteur permet de faire cette mesure différentielle. L'obturateur peut être mécanique (lame opaque passant périodiquement devant le détecteur) ou électro-optique (cellule à cristal liquide).

On peut admettre que la charge pyroélectrique engendrée dans une capacité pyroélectrique est représentée par une tension, soit que cette tension soit la tension directement mesurée aux bornes de la capacité ou une tension déduite de celle-ci, soit que la tension soit le résultat de la conversion d'un paquet de charges pyroélectriques injectées par la capacité dans le substrat, soit enfin qu'elle soit le résultat de la conversion d'un paquet de charges modulé par la tension aux bornes de la capacité pyroélectrique. Dans tous les cas, l'allure des variations de la tension représentant la charge pyroélectrique est alors celle qu'on a expliquée en référence à la figure 1.

Le principe de la mesure pour un point pyrosensible consiste alors à déterminer la tension VSB en fin d'une phase de masquage, puis la tension VSH en fin de phase d'éclairement; on fait la différence VSH-VSB qui est un signal représentant l'éclairement infrarouge en ce point. On améliore la qualité de la mesure, et en particulier le rapport signal/bruit en effectuant deux mesures successives pour un même cycle de masquage et d'éclairement : on mesure la différence de tension engendrée entre le début et la fin de l'éclairement, puis la différence de tension engendrée entre le début de la phase de masquage et la fin de la phase de masquage, et on fait la différence entre ces deux mesures.

Ce principe est appliqué en particulier dans le cas où on effectue une recalage de tension de l'armature inférieure de la capacité pyroélectrique à la fin de chaque phase (pour éviter les dérives dues par exemple à la génération thermique de porteurs de charge dans la diode D1 reliée entre la capacité pyroélectrique et le substrat, diode servant à la polarisation initiale du matériau pyroélectrique : voir demande de brevet précitée FR 90 15476). Dans ce cas, l'évolution de tension aux bornes de la capacité pyroélectrique est plutôt celle de la figure 3. La mesure de température d'un point consiste encore à déterminer la différence de tension engendrée entre le début et la fin de la phase d'éclairement et de préférence aussi la différence engendrée entre le début et la fin de la phase de masquage, et on peut également faire la différence entre ces deux mesures. Par exemple on mesure la tension VDE1 en début de phase d'éclairement, juste après un recalage de tension (RAZ), puis la tension VFE1 en fin de phase d'éclairement; puis on effectue un recalage; on mesure la tension VDM1 en début de phase de masquage juste après ce recalage, et la tension VFM1 en fin de phase de masquage; on fait à nouveau une recalage de tension, etc. Le signal utile est obtenu par la différence VFE1-VDE1, ou VFM1-VDM1, ou mieux encore par (VFE1-VDE1)-(VFM1-VDM1).

Au cycle suivant les mêmes mesures sont effectuées :
cycle 2 : VDE2, VFE2, VDM2, VFM2
cycle 3 / VDE3, VFE3, VDM3, VFM3.

Les recalages de tension (RAZ) sont effectués en synchronisme avec les changements de phase de l'obturateur.

L'intervalle de temps qui sépare la mesure et le recalage est très faible comparé à la durée de la phase : par exemple quelques microsecondes entre une mesure et un recalage pour une phase d'éclairement ou de masquage qui dure 3 millisecondes.

Les quatre mesures correspondant à un cycle peuvent être stockées dans quatre cases adjacentes d'un registre à décalage.

La figure 4 représente schématiquement l'organisation du registre à décalage RD associé à une colonne de capacités pyroélectriques CP. Le nombre de cases du registre est quatre fois plus élevé que le nombre de capacités. Les armatures inférieures des capacités sont remises à niveau régulièrement par les transistors T1 reliés à une source de tension de remise à niveau VDR. Un injecteur de charges INJ, contrôlé par le potentiel de la capacité pyroélectrique, est activé simultanément pour toutes les capacités. L'injecteur injecte dans le registre des charges en quantité proportionnelle aux signaux de mesure VDE1, VFE1, etc. Le registre est décalé en synchronisme avec les différentes mesures donc avec les différents instants d'injection. La diode D1, entre la capacité et le substrat, est celle qui sert à la polarisation initiale de la couche pyroélectrique et qui tend à engendrer du bruit gênant en utilisation normale.

Quatre opérations d'injection se succèdent pour chaque cycle : injection d'un signal représentant VDE1, décalage d'une case du registre; injection d'un signal correspondant à VFE1; remise à niveau et décalage d'une case du registre; injection de VDM1; décalage d'une case; injection de VFM1; remise à niveau.

Dans la technique antérieure, après la fin d'un cycle, on vide le registre en colonne pour obtenir un signal d'image (classiquement, la dernière case de chacun des registres en colonne se vide dans une case respective d'un registre horizontal RH ; cette opération est répétée quatre fois; puis le registre horizontal est vidé très rapidement après chaque série de quatre pas de décalage des registres en colonne).

En fait, dans la technique antérieure, les cycles sont légèrement décalés par rapport à ce qui vient d'être dit : pour avoir le temps de vider le registre pendant la première phase du cycle suivant, sans perdre les mesures de ce cycle suivant, on stocke les mesures successives suivantes :

cycle 1 : VFE1, VDM1, VFM1, VDE2 ;
cycle 2 : VFE2, VDM2, VFM2, VDE3, etc...

Selon l'invention, on va augmenter la fréquence de fonctionnement de l'obturateur, réduisant ainsi la durée de chaque phase, tout en continuant à sortir des signaux d'image avec la même périodicité.

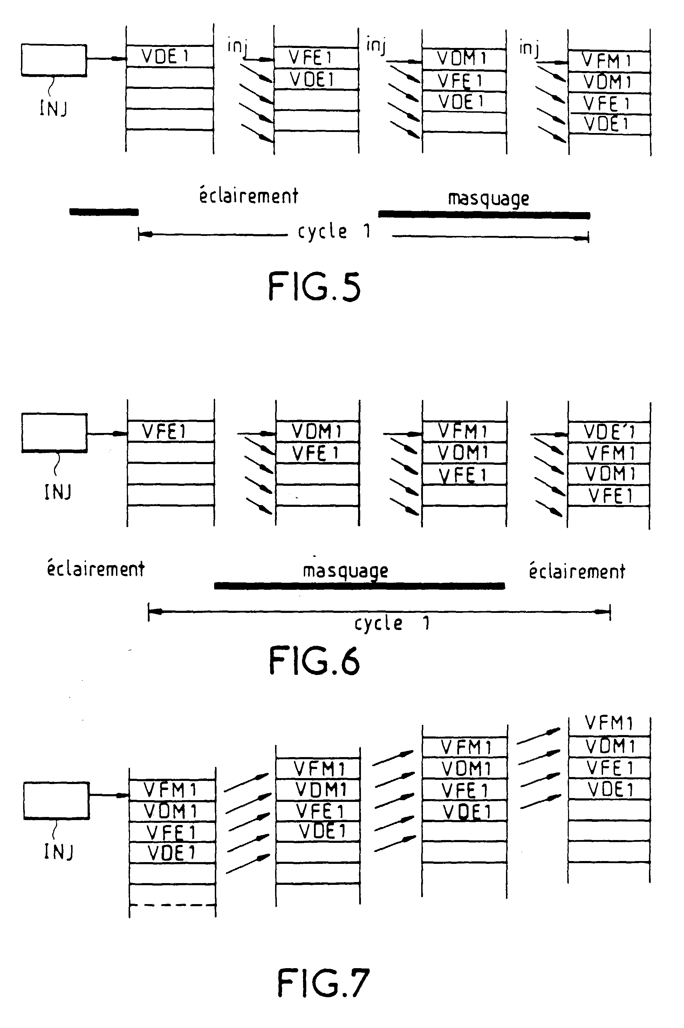

Pendant un premier cycle comprenant une alternance de phases de masquage et d'éclairement on déverse successivement dans le registre RD, par l'injecteur INJ, les mesures effectuées au cours de ce cycle. Dans la version la plus simple le cycle commence au début de la phase d'éclairement et se termine à la fin de la phase de masquage qui suit, et on stocke au cours de ce cyle successivement les mesures VDE1, VFE1, VDM1, VFM1 en faisant avancer le contenu du registre d'un pas après chaque mesure, trois pas au total. La figure 5 représente le remplissage progressif du registre qui en résulte. Seules quatre cases de registre sont considérées, les quatre cases suivantes ou précédentes ne correspondant pas au même point d'image mais aux points adjacents de la même colonne.

On notera que le cycle pourrait commencer juste avant la fin d'une phase d'éclairement ou de masquage, par exemple juste avant le déversement de VFE1 ; dans ce cas, le cycle (de même que les cycles suivants) comprendrait l'alternance suivante : fin de phase d'éclairement, phase complète de masquage, et la majeure partie d'une nouvelle phase d'éclairement. Ce cas est représenté figure 6.

Après la fin du premier cycle, on fait reculer rapidement le contenu du registre RD de trois pas avant le déversement des mesures correspondant au cycle suivant. On remarquera que si on ne dispose pas d'assez de temps pour faire reculer le contenu du registre de trois pas entre le déversement de VFM1 et celui de VDE2, il faut adopter la structure de cycle de la figure 6 plutôt que celle de la figure 5.

Le contenu du registre pendant cette phase de recul est représenté à la figure 7. Le contenu initial est celui qui correspond à la dernière phase de la figure 5. Le contenu final est tel que la charge correspondant à la mesure VDE1 est maintenant dans la case de registre située en regard du dispositif d'injection INJ.

On effectue alors le deuxième cycle de mesures : injection d'une charge correspondant à une nouvelle mesure VDE2 en début d'éclairement, avance d'un pas du registre, deuxième mesure VFE2, avance d'un pas, troisième mesure VDM2, avance d'un pas, et dernière mesure VFM2.

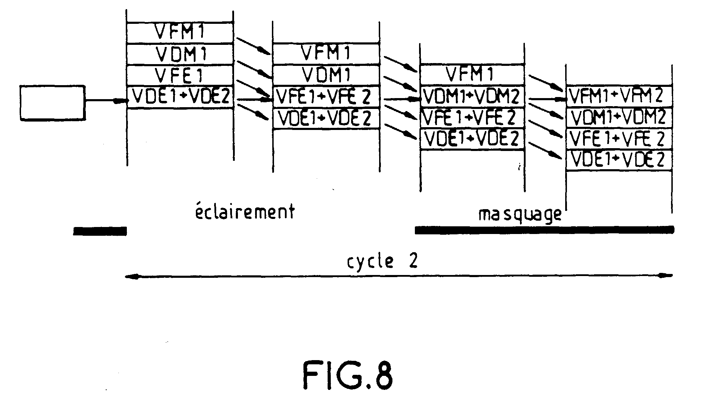

Les charges déversées à chaque mesure s'ajoutent au contenu précédent de la case du registre qui est en regard du dispositif d'injection. Il en résulte que les mesures des phases qui se correspondent dans les deux cycles s'ajoutent. L'évolution des contenus est représentée à la figure 8.

On peut alors répéter plusieurs fois les étapes de recul (fig. 7) et de mesure (fig. 8) pour additionner plusieurs mesures successives avant de vider le registre pour obtenir un signal d'image.

Dans le cas général, on utilisera la durée d'un cycle complet éclairement/masquage pour vider le registre sans faire de mesures ; mais si la durée d'une phase d'éclairement (ou de masquage) restait suffisante pour qu'on ait le temps de vider le registre entre la mesure de début d'éclairement et la mesure de fin d'éclairement, on peut vider le registre sans interrompre les cycles de mesure. Il faut alors adopter une structure de cycles telle que celle décrite à propos de la figure 6 (fin de cycle immédiatement après le début d'une phase d'éclairement ou de masquage).

Les signaux recueillis après vidage du registre sont utilisés pour établir un signal différentiel représentant les variations de température au cours des phases d'éclairement (VFE1 + VFE2) - (VDE1, + VDE2), un signal différentiel représentant les variations de température au cours des phases de masquage (VFM1 + VFM2) - (VDM1 + VDM2) ; et un signal de résultat représentant la différence entre les signaux différentiels :

$$(VFE1 + VFE2 + VDM1 + VDM2) -$$
$$(VDE1 + VDE2 + VFM1 + VFM2).$$

Ce signal représente l'intensité infrarouge émise par un point d'image, moyennée sur deux cycles consécutifs.

## Revendications

1. Détecteur d'image thermique qui comporte au moins une colonne de points pyrosensibles, chaque point relié à un étage respectif d'un registre à décalage (RD) pour y déverser des charges en quantité dépendant de la température de chaque point, le nombre d'étages du registre étant supérieur au nombre de points pyrosensibles de la colonne, un obturateur pour alternativement éclairer et masquer le détecteur, un moyen pour fournir cycliquement au registre au moins un signal de mesure de point éclairé au cours d'une phase d'éclairement et au moins un signal de mesure de point masqué au cours d'une phase de masquage, caractérisé en ce que des étages de registre non connectés aux points pyrosensibles sont intercalés entre les étages connectés aux points pyrosensibles, et en ce qu'il est prévu un moyen pour faire avancer d'un pas le contenu du registre entre les déversements de mesures d'un cycle comportant au moins une phase d'éclairement et une phase de masquage, un moyen pour faire reculer, d'un nombre de pas en arrière lié au nombre de pas en avant dans le cycle précédent, le contenu du registre avant le déversement des mesures du cycle suivant et pour le faire avancer à nouveau d'un pas entre les déversements de ce cycle suivant, et des moyens pour vider le registre après l'exécution d'un groupe d'au moins deux cycles successifs pour fournir un signal d'image.

2. Procédé de fonctionnement d'un détecteur d'image thermique comprenant au moins une colonne de points pyrosensibles, chaque point relié à un étage respectif d'un registre à décalage pour y déverser des charges en quantité dépendant de la température de chaque point, le nombre d'étages du registre étant supérieur au nombre de points pyrosensibles de la colonne, un obturateur pour alternativement éclairer et masquer le détecteur, un moyen pour fournir cycliquement au registre au moins un signal de mesure de point éclairé au cours d'une phase d'éclairement et au moins un signal de mesure de point masqué au cours d'une phase de masquage, caractérisé en ce que d'une part des étages de registre non connectés aux points pyrosensibles sont intercalés intercalés entre les étages connectés aux points pyrosensibles, et en ce que d'autre part il comprend les étapes suivantes :

a.) faire des mesures au cours d'un premier cycle comprenant une alternance de phases d'éclairement et de masquage, et déverser les résultats des mesures dans des étages successifs d'un registre à décalage, en faisant avancer le registre d'un pas après un déversement et avant le déversement d'une mesure suivante de ce cycle,

b.) faire reculer le contenu du registre d'un nombre de pas en arrière lié au nombre de pas en avant dans le cycle,

c.) faire des mesures au cours d'un deuxième cycle comprenant une alternance de phases d'éclairement et de masquage, déverser les résultats des mesures dans les étages du registre à décalage en faisant à nouveau avancer le registre d'un pas après un déversement et avant le déversement suivant dans le même cycle,

d.) et enfin à vider la totalité du contenu du registre pour fournir un signal d'image après l'exécution d'au moins deux cycles successifs.

3. Procédé selon la revendication 2, caractérisé en ce que les étapes b et c sont répétées plus de deux fois avant l'étape d.

4. Procédé selon l'une des revendications 2 et 3, caractérisé en ce qu'on déverse dans deux cases du registre aux cours d'une même phase d'une part une mesure en début de phase et d'autre part une mesure en fin de phase.

5. Procédé selon la revendication 4, caractérisé en ce qu' une étape de remise à niveau de potentiel est effectuée en synchronisme avec les changements de phase de l'obturateur, avant chaque mesure en début de phase.

## Patentansprüche

1. Wärmebilddetektor, der mindestens eine Spalte von pyroempfindlichen Punkten, die je mit einer Stufe eines Schieberegisters (RD) verbunden sind, um in dieses Ladungen zu leiten, deren Menge von der Temperatur jedes Punkts abhängt, wobei die Anzahl der Stufen des Registers größer ist als die Anzahl von pyroempfindlichen Punkten der Spalte, einen Verschluß zum abwechselnden Belichten und Verdecken des Detektors, und ein Mittel enthält, um dem Register zyklisch mindestens ein Meßsignal eines belichteten Punkts während einer Belichtungsphase und mindestens ein Meßsignal des verdeckten Punkts während einer Verdeckungsphase zu liefern, dadurch gekennzeichnet, daß nicht mit den pyroempfindlichen Punkten verbundene Registerstufen zwischen die mit den pyroempfindlichen Punkten verbundenen Registerstufen geschoben sind und daß ein Mittel, um den Inhalt des Registers zwischen dem Einleiten von Meßwerten eines Zyklus, der mindestens eine Belichtungsphase und eine Verdeckungsphase aufweist, um einen Schritt vorwärtszubewegen, ein Mittel, um den Inhalt des Registers vor dem Einleiten der Meßwerte des folgenden Zyklus um eine Anzahl von Schritten nach rückwärts zu verschieben, die der Anzahl der Vorwärtsschritte im vorhergehenden Zyklus entspricht, und um den Inhalt des Registers von neuem um einen Schritt vorrücken zu lassen vor der Einleitung der Meßwerte dieses folgenden Zyklus, und Mittel vorgesehen sind, um das Register nach der Ausführung einer Gruppe von mindestens zwei aufeinanderfolgenden Zyklen zu leeren, um ein Bildsignal zu liefern.

2. Betriebsverfahren eines Wärmebilddetektors, der mindestens eine Spalte von pyroempfindlichen Punkten, die je mit einer Stufe eines Schieberegisters verbunden sind, um in dieses Ladungen zu leiten, deren Menge von der Temperatur jedes Punkts abhängt, wobei die Anzahl der Stufen des Registers größer ist als die Anzahl von pyroempfindlichen Punkten der Spalte, einen Verschluß zum abwechselnden Belichten und Verdecken des Detektors, und ein Mittel enthält, um dem Register zyklisch mindestens ein Meßsignal eines belichteten Punkts während einer Belichtungsphase und mindestens ein Meßsignal des verdeckten Punkts während einer Verdeckungsphase zu liefern, dadurch gekennzeichnet, daß einerseits nicht mit den pyroempfindlichen Punkten verbundene Registerstufen zwischen die mit den pyroempfindlichen Punkten verbundenen Registerstufen geschoben sind, und daß es andererseits die folgenden Schritte aufweist:

a) Durchführung von Messungen während eines ersten Zyklus, der eine Wechselfolge von Belichtungs- und Verdekkungsphasen aufweist, und Einschreiben der Meßwerte in aufeinanderfolgende Stufen eines Schieberegisters, indem das Register nach dem Einschreiben eines Meßwerts und vor dem Einschreiben eines folgenden Meßwerts dieses Zyklus um einen Schritt vorgerückt wird,
b) Rückwärtsverschiebung des Inhalt des Registers um eine Anzahl von Schritten, die mit der Anzahl von Vorwärtsschritten in diesem Zyklus verknüpft ist,
c) Durchführung von Messungen während eines zweiten Zyklus, der eine Wechselfolge von Belichtungs- und Verdekkungsphasen aufweist, Einschreiben der Meßwerte in die Stufen des Schieberegisters, indem von neuem das Register nach einem Einschreiben eines Meßwerts und vor dem Einschreiben des nächsten Meßwerts im gleichen Zyklus um einen Schritt vorwärtsbewegt wird,
d) und schließlich das vollständige Entleeren des Registers, um ein Bildsignal nach der Durchführung mindestens zweier aufeinanderfolgender Zyklen zu liefern.

3. Verfahren nach Anspruch 2, dadurch gekennzeichnet, daß die Schritte b) und c) vor dem Schritt d) mehrmals wiederholt werden.

4. Verfahren nach einem der Ansprüche 2 und 3, dadurch gekennzeichnet, daß man in zwei Fächer des Registers während der gleichen Phase einerseits einen Meßwert zu Beginn einer Phase und andererseits einen Meßwert am Ende einer Phase einschreibt.

5. Verfahren nach Anspruch 4, dadurch gekennzeichnet, daß eine Potential-Pegelrücksetzung des Potentials gleichzeitig mit dem Phasenwechsel des Verschlusses vor jeder Messung zu Beginn einer Phase durchgeführt wird.

**Claims**

1. Thermal image detector which includes at least one column of pyrosensitive points, each point linked to a respective stage of a shift register (RD) so as to transfer charges thereto in a quantity depending on the temperature of each point, the number of stages of the register being greater than the number of pyrosensitive points of the column, a shutter for alternately illuminating and masking the detector, a means for cyclically supplying the register with at least one illuminated point measurement signal in the course of an illumination phase and at least one masked point measurement signal in the course of a masking phase, characterized in that register stages not connected to the pyrosensitive points are interposed between the stages connected to the pyrosensitive points, and in that a means is provided for causing the content of the register to advance by one step between the transfers of measurements of a cycle including at least one illumination phase and one masking phase, a means for shifting back the content of the register by a number of backwards steps related to the number of forward steps in the preceding cycle, before the transfer of the measurements of the following cycle, and to make it advance again by one step between the transfers of this following cycle, and means for emptying the register after performing a group of at least two successive cycles so as to supply an image signal.

2. Method of operating a thermal image detector, comprising at least one column of pyrosensitive points, each point linked to a respective stage of a shift register so as to transfer charges thereto in a quantity depending on the temperature of each point, the number of stages of the register being greater than the number of pyrosensitive points of the column, a shutter for alternately illuminating and masking the detector, a means for cyclically supplying the register with at least one illuminated point measurement signal in the course of an illumination phase and at least one masked point measurement signal in the course of a masking phase, characterized in that register stages not connected to the pyrosensitive points are interposed between the stages connected to the pyrosensitive points, and in that, moreover, it comprises the following stages:

a) taking measurements in the course of a first cycle comprising an alternation of illumination and of masking phases, and transferring the results of the measurements into successive stages of a shift register, by causing the register to advance by one step after a transfer and before the transfer of a following measurement of this cycle,

b) causing the content of the register to shift back by a number of backward steps related to the number of forward steps in the cycle,

c) taking measurements in the course of a second cycle comprising an alternation of illumination and of masking phases, transferring the results of the measurements into the stages of the shift register by again causing the register to advance by one step after a transfer and before the following transfer in the same cycle,

d) and finally in emptying the whole contents of the register so as to supply an image signal after at least two successive cycles have been performed.

3. Method according to Claim 2, characterized in that stages b and c are repeated more than twice before stage d.

4. Method according to one of Claims 2 and 3, characterized in that, on the one hand a start-of-phase measurement, and on the other hand an end-of-phase measurement are transferred into two cells of the register in the course of the same phase.

5. Method according to Claim 4, characterized in that a stage of potential level resetting is carried out in synchronism with the changes in phase of the shutter, before each start-of-phase measurement.

FIG.1

FIG.3

FIG.2

acité pyroélectrique    capacité pyroélectrique    capacité pyroélectrique

20    18    22    24    CP
18
18
16
12
16    14    16    14
26    28    30
10

EP 0 605 282 B1

FIG. 4

FIG.5

FIG.6

FIG.7

éclairement    masquage

cycle 2

# FIG.8